# EUROPÄISCHE PATENTSCHRIFT

(11) **EP 0 610 999 B1**
(45) Veröffentlichungstag und Bekanntmachung des Hinweises auf die Patenterteilung: **06.05.1999**
(21) Anmeldenummer: 94200287.4
(22) Anmeldetag: 03.02.1994
(51) Int. Cl.: H04L 12/28, G06F 13/40

(54) **Röntgenanlage**
Radiographic installation
Installation radiologique

(30) Priorität: 09.02.1993 DE 4303643
(43) Veröffentlichungstag der Anmeldung: 17.08.1994
(73) Patentinhaber: Philips Patentverwaltung GmbH, 22335 Hamburg (DE); Koninklijke Philips Electronics N.V., 5621 BA Eindhoven (NL)
(72) Erfinder: Heinz, Erich-Jürgen, D-20097 Hamburg (DE)
(74) Vertreter: Hartmann, Heinrich, Dipl.-Ing.

(56) Entgegenhaltungen:
- DE-A- 4 025 834
- DE-A- 4 034 154
- GB-A- 2 166 328
- PATENT ABSTRACTS OF JAPAN vol. 11, no. 127 (E-501)21. April 1987 & JP-A-61 270 949 (MATSUSHITA ELECTRIC IND CO LTD) 1. Dezember 1986
- PATENT ABSTRACTS OF JAPAN vol. 12, no. 430 (E-682)14. November 1988 & JP-A-63 164 724 (MATSUSHITA ELECTRIC IND CO LTD) 8. Juli 1988

## Beschreibung

Die Erfindung betrifft eine Röntgenanlage mit einer Anzahl von Komponenten, denen je ein dem CAN-Protokoll entsprechender Datenübertragungsknoten zugeordnet ist, dessen Datenein- und -Ausgang über Sender bzw. Empfänger mit anderen Datenübertragungsknoten in Wechselwirkung stehen, wobei die Datenübertragungsknoten über Leitungen mit den ihnen jeweils zugeordneten Komponenten verbunden sind. Eine solche Röntgenanlage ist aus der DE-A-40 25 834 bekannt.

Das CAN-Protokoll ist u.a. in der Intel-Broschüre "82526 Serial Communications Controller Architectural Overview" (Order Number: 270678-001) sowie in der Zeitschrift "Elektronik" (Nr. 25 vom 08.12.1989, Seiten 79 bis 83 und Nr. 12 vom 08.06.1990, Seiten 109 bis 114) beschrieben. Nach dem CAN-Protokoll werden Daten durch die beiden logischen Pegel "dominant" und "rezessive" definiert. Ein dominantes Bit ergibt sich dann, wenn ein oder mehrere (Datenübertragungs-)Knoten ein dominantes Bit senden. Ein rezessives Bit erscheint nur dann, wenn alle Knoten ein solches Bit erzeugen. Die Informationen sind durch einen NRZ-Code codiert, d.h. daß sich der logische Pegel bei mehreren aufeinanderfolgenden Bits der gleichen Art nicht ändert.

Nach dem CAN-Protokoll kann jeder Knoten jederzeit Daten an jeden anderen Knoten senden (Multimaster-Prinzip), ohne auf die Erteilung einer Sendeberechtigung warten zu müssen. Der Informationsaustausch erfolgt daher sehr schnell, was zumindest für einige Komponenten in einer Röntgenanlage wesentlich ist.

Nach dem CAN-Protokoll enthält jede Nachricht (Nachrichten werden im CAN-Protokoll als "Kommunikationsobjekte" bezeichnet) einen sogenannten "Identifier", der die Art der zu übermittelnden Daten kennzeichnet und der im Anschluß an ein Startbit ausgesendet wird. Wenn mehrere Datenknoten gleichzeitig zu senden beginnen, brechen diejenigen Knoten, die beim Aussenden des Identifiers ein recessives Bit gesendet, aber ein dominantes Bit empfangen haben, ihre Sendung ab, so daß nur noch ein Datenknoten die darauffolgenden Daten der Nachricht aussenden kann. Diejenigen Knoten, die die Daten und Prüfworte des Senders korrekt empfangen haben, senden ein Empfangsbestätigungssignal (ACK-Signal) noch bevor der jeweils sendende Knoten eine Übertragung beendet hat. Diejenigen Knoten, die eine fehlerhafte Übermittlung feststellen, senden ein Fehlersignal, das alle anderen Knoten ebenfalls zur Aussendung eines Fehlersignals und den sendenden Knoten zum Abbruch und zur Wiederholung der Sendung veranlaßt. Dadurch ergibt sich bei nach dem CAN-Protokoll arbeitenden Datenknoten neben einer hohen Übertragungsgeschwindigkeit eine hohe Übertragungssicherheit.

Bei der bekannten Röntgenanlage sind die einzelnen Datenübertragungsknoten über zu einem Ring zusammengeschaltete Lichtwellenleiter miteinander verbunden. Die Zeit, die für die Übertragung eines Bit vorgesehen ist, muß größer sein als die Zeit, die das Lichtsignal benötigt, um von Knoten zu Knoten den letzten Knoten im Ring zu erreichen. Dadurch werden die Vorteile der durch das CAN-Protokoll gegebenen hohen Datenübertragungsgeschwindigkeit teilweise wieder zunichte gemacht. Bei der bekannten Anlage können sich darüberhinaus Schwierigkeiten ergeben, wenn eine zusätzliche Komponente in die Röntgenanlage aufgenommen werden soll (in diesem Fall muß ein zusätzlicher Datenübertragungsknoten über zusätzliche Lichtleiter in den Lichtleiterring aufgenommen werden) und wenn Komponenten relativ zu anderen Komponenten in erheblichem Ausmaß bewegt werden, weil die zugehörigen Datenübertragungsknoten über Lichtleiter mit den anderen Datenübertragungsknoten in Verbindung stehen.

Aufgabe der vorliegenden Erfindung ist es daher, eine Röntgenanlage der eingangs genannten Art so auszugestalten, daß auf einfache Weise bei hoher Datenübertragungsgeschwindigkeit die Zahl der mit einem Datenübertragungsknoten versehenen Komponenten oder die räumliche Position einzelner Komponenten geändert werden kann.

Diese Aufgabe wird erfindungsgemäß dadurch gelöst, daß die Sender und Empfänger wenigstens einiger Datenübertragungsknoten für die drahtlose Übertragung ausgebildet sind, und daß diese Sender bzw. Empfänger so angesteuert sind, daß sie Daten zumindest an die drahtlosen Empfänger von anderen Datenübertragungsknoten senden bzw. Daten von den drahtlosen Sendern zumindest der anderen Datenübertragungsknoten empfangen können.

Die erwünschte Flexibilität hinsichtlich der Zahl der Datenübertragungsknoten und der Bewegbarkeit von einzelnen Komponenten wird dabei durch die drahtlose Übertragung, d.h. durch eine Übertragung ohne elektrische Leiter oder Lichtleiter erreicht. Die bei Anlagen nach dem CAN-Protokoll gegebene hohe Zugriffsgeschwindigkeit auf andere Knoten bleibt erhalten, weil jeder der drahtlos übertragenden Knoten jederzeit jeden anderen drahtlos übertragenden Knoten erreichen kann.

Es sei an dieser Stelle erwähnt, daß die drahtlose Datenübertragung - zumindest auf anderen technischen Gebieten - durchaus bekannt ist.

So ist aus der US-A-4,775,928 ein System mit einem Host-Computer bekannt, der mit einem tragbaren Terminal mit einer Eingabetastatur drahtlos in Verbindung treten kann. Die drahtlose Übertragung erfolgt dabei mittels hochfrequenter elektromagnetischer Wellen. Am Terminal eingegebene Daten werden zu dem Host-Computer übertragen und von diesem an das Terminal zurückübertragen und erst danach am Terminal angezeigt; diese Hin- und Rückübertragung verringert die Übertragungsgeschwindigkeit. Wenn zwei oder mehrere Terminals vorgesehen sind, muß der Host-Computer über unterschiedliche Sicherheitscodes mit diesen Terminals kommunizieren. Diese Anlage eignet sich nur für den Daten) austausch zwischen einer zentralen Station und einer oder mehreren Satelliten-Stationen.

In der GB-A-2,166,328 ist andererseits ein Haus-Verteilungssystem beschrieben, bei dem verschiedene Stationen, wie Fernsehempfänger, Videorecorder, Stereo-Rundfunkempfänger und maximal eine Fernbedienung pro Raum miteinander über einen gemeinsamen ISDN-Bus kommunizieren können. Die (Infrarot-) Fernbedienung kann dabei über einen an den ISDN-Bus angeschlossenen Infrarot-Adapter mit anderen Stationen in Verbindung treten; die Infrarotverbindung zwischen Fernbedienung und Adapter verbindet also nur jeweils einen Sender mit einem Empfänger. Der Datenfluß auf dem ISDN-Bus wird durch eine Zentraleinheit so gesteuert, daß immer nur eine der an den Bus angeschlossenen Stationen Daten senden kann. Zu diesem Zweck kann die Zentraleinheit beispielsweise nacheinander die Adressen der Stationen aufrufen. Ist die jeweils aufgerufene Station sendebereit, sendet sie ein (Service Request-SRQ)-Signal und empfängt danach von der Zentralstation die Sendeberichtigung. Danach sendet die betreffende Station ihre Nachricht, die u.a. die Adresse einer anderen Station sowie ein Prüfwort enthält, und die adressierte Station sendet ein Bestätigungs (Acknowledge-Signal), wenn das Prüfwort korrekt empfangen wurde. Dieses Verfahren eignet sich nur für Anwendungen, bei denen vergleichsweise lange Wartezeiten bis zur Erteilung der Sendeberechtigung in Kauf genommen werden können.

Bei der Erfindung können im Prinzip sämtliche Datenübertragungsknoten mit einem Sender und einem Empfänger für die drahtlose Übertragung versehen sein. Dies ist aber nicht in jedem Fall sinnvoll. Bei Komponenten beispielsweise, die dicht beieinander angeordnet sind und ihre gegenseitige Position nicht verändern, ist die Datenübertragung über Leitungen im allgemeinen sinnvoller als die drahtlose Übertragung, weil sich hierbei in der Regel eine größere Störsicherheit ergibt. Eine Weiterbildung sieht daher vor, daß ein drahtloser Sender, der die anderen drahtlosen Empfänger erreichen kann bzw. ein drahtloser Empfänger, der Daten von den anderen drahtlosen Sendern empfangen kann, an ein leitungsgebundenes Bus-System angeschlossen ist, an das zugleich mehrere Datenübertragungsknoten angeschlossen sind.

Hierbei gibt es also zwei Gruppen von Knoten. Die Knoten der einen Gruppe sind an das Bussystem angeschlossen, während die Knoten der anderen Gruppe jeweils mit einem drahtlosen Sender bzw. Empfänger versehen sind. Ein Knoten aus der einen Gruppe tritt mit einem Knoten aus der anderen Gruppe über einen drahtlosen Sender (an einem der Knoten oder am Bus) und einem drahtlosen Empfänger (am Bus bzw. einem der Knoten) in Verbindung. Dabei wird man die Knoten von mobilen oder neu hinzukommenden Komponenten der Röntgenanlage zweckmäßigerweise mit drahtlosen Sendern und Empfängern versehen, aber auch Bedienelemente oder Anzeigeeinheiten. Ebenso eignet sich diese Ausgestaltung für den steckerfreien Anschluß von Service- oder Diagnosesystemen an die Datenübertragungsknoten der Komponenten einer Röntgenanlage.

Die Erfindung wird nachstehend anhand der Zeichnung näher erläutert. Es zeigen
Fig. 1 ein Blockschaltbild eines Teils einer erfindungsgemäßen Röntgenanlage,
Fig. 2 einen Datenrahmen nach dem CAN-Protokoll.

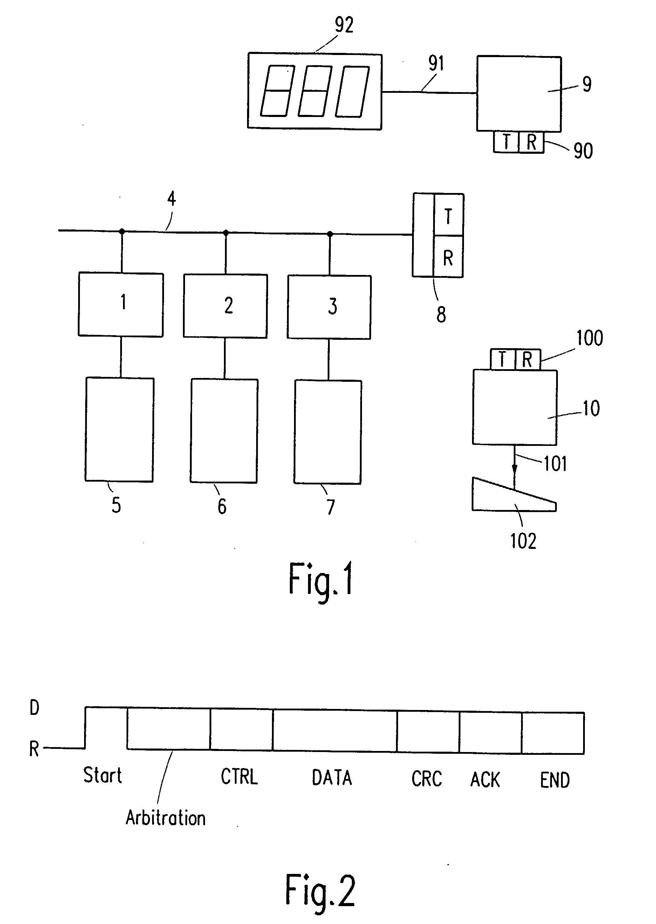

In Fig. 1 sind mit 1, 2 und 3 drei Datenübertragungsknoten bezeichnet, deren Datenein- und Ausgänge an ein Bussystem 4 angeschlossen sind. Jeder Datenübertragungsknoten ist eine Komponente der Röntgenanlage zugeordnet, die von dem betreffenden Knoten gesteuert wird. So ist an den Knoten 1 eine Komponente 5 angeschlossen, beispielsweise ein Antrieb für die Schwenkung der Tischplatte eines Patientenlagerungstisches um eine horizontale Achse. Dem Knoten 2 ist eine Komponente 6 zugeordnet, beispielse ein Antrieb für die Verschiebung der Tischplatte in Längsrichtung und die Komponente 7, die von dem Knoten 3 gesteuert wird, kann ein Antrieb zur Verschiebung der Tischplatte in Querrichtung sein. An den Bus 4 sind noch weitere Datenübertragungsknoten mit je einer zugeordneten Komponente der Röntgenanlage angeschlossen, doch sind diese Einheiten in der Zeichnung nicht dargestellt.

Außerdem ist der Bus 4 mit einem Infrarotumsetzer 8 verbunden. Der Infrarotumsetzer 8 enthält einen Sender T, der die Daten auf dem Bus in Infrarotsignale umsetzt, wobei der Infrarotsender bei einem dominaten Bit Licht emittiert, und bei einem rezessiven Bit kein Licht emittiert. Der Infrarotumsetzer enthält außerdem einen Empfänger R, der Infrarotsignale in elektrische Signale auf den Bus umsetzt.

Außer der Gruppe der Knoten (1, 2, 3), die an das leitungsgebundene Bussystem 4 angeschlossen sind, gibt es noch eine weitere Gruppe von Knoten. Diese Knoten - 9 und 10 - sind mit Infrarotumsetzern 90, 100 zur drahtlosen Kommunikation versehen. Jeder Infrarotumsetzer 90 bzw. 100 weist einen Sender T auf, der mit dem nicht näher dargestellten Datenausgang des Knotens verbunden ist, und einen Infrarotempfänger R, der an den nicht näher dargestellten Dateneingang des Knotens angeschlossen ist. Die Umsetzer sind so angeordnet, daß jeder Sender jeden Empfänger erreichen kann - allenfalls mit Ausnahme des zu dem gleichen Umsetzer gehörenden Empfängers; jedoch ist es von Vorteil, wenn jeder Infrarotsender auch den Infrarotempfänger in dem gleichen Umsetzer erreicht. Der Knoten 9 steuert über Leitungen 91 beispielsweise ein Display 92, während der Knoten 10 über Leitungen 101 beispielsweise mit einer Bedieneinheit 102 verbunden ist.

Im folgenden soll die beim CAN-Protokoll übliche Datenübertragung am Beispiel einer Steuerung der Umlegung der Tischplatte mittels der Bedieneinheit 102 erläutert werden, wobei beispielhaft davon ausgegangen wird, daß der Benutzer in die Bedieneinheit 102 ein Kommando für die Tischplattenumlegung eingegeben hat. Der zugehörige Infrarotsender sendet dann eine Nachricht aus, ein sogenanntes Kommunikationsobjekt, das sämtlichen Infrarotempfängern (mit Ausnahme allenfalls des im Umsetzer 100 enthaltenen Infrarotempfängers) zugeht und dessen Datenrahmen in Fig. 2 dargestellt ist. Der Datenrahmen enthält zunächst ein Startbit, dessen logischer Pegel (D) dominant ist, d.h. der Sender emittiert während der Übertragung dieses Bits Infrarotlicht.

Dem Startbit folgt ein 12 Bit langes Abitrationsfeld. Die ersten elf Bit enthalten den sogenannten "Identifier" des Kommunikationsobjektes, der die auszusendenden Daten kennzeichnet (aber nicht den jeweiligen Knoten) und der u.a. dazu dient, bei mehreren gleichzeitig sendenden Knoten dasjenige Kommunikationsobjekt festzulegen, das Vorrang hat. Wenn nämlich mehrere Knoten gleichzeitig mit der Aussendung unterschiedlicher Nachrichten beginnen, dann brechen alle diejenigen Knoten ihre Sendung ab, die bei der Aussendung des ihrer Nachricht zugeordneten Identifiers ein rezessives Bit (kein Licht) gesendet, aber ein dominantes Bit (Licht) empfangen haben. Übrig bleibt der Knoten, der die Nachricht mit der höchsten Priorität aussendet, dessen Identifier zu Beginn also mehr dominante Bits enthält als die von den übrigen Knoten ausgesandten Identifier.

Danach folgt ein Steuerfeld (CTRL) mit 6 Bit, ein Datenfeld mit einer Länge zwischen 0 und 64 Bit, ein Prüffeld (CRC) mit 16 Bit und ein Empfangsbestätigungsfeld (ACK), das aus zwei Bit besteht, die für den sendenden Knoten rezessiv sind. Jeder Knoten, der die gesendete Nachricht fehlerfrei empfangen hat, sendet während der Dauer des zweiten dieser beiden Bits ein dominantes Bit (Licht), auch wenn die Nachricht nicht für ihn bestimmt ist. Wenn nicht mindestens ein Knoten den korrekten Empfang bestätigt oder wenn ein Knoten ein Fehlersignal (sieben dominante Bits) sendet, wiederholt der jeweils übertragende Sender seine Nachricht; andernfalls wird mit einem letzten, sieben rezessive Bits umfassenden Datenfeld das Ende der Nachricht signalisiert.

Nachdem auf diese Weise alle Knoten die Nachricht empfangen und als korrekt erkannt haben, reagiert der oder die Knoten, für den die Nachricht bzw. das Kommunikationsobjekt bestimmt war, weil in einem in dem Knoten enthaltenden Speicher der Identifier von diesem Kommunikationsobjekt abgelegt ist, in diesem Fall der Knoten 1, der den Antrieb 5 für die Tischplattenumlegung steuert.

Während der Tischplattenumlegung kann der Knoten die Tischplattenstellung in regelmäßigen zeitlichen Abständen oder z.B. wenn eine besondere Stellung - etwa die horizontale Tischstellung - erreicht ist, eine entsprechende Nachricht senden, die über den Sender des Infrarotumsetzers 8 ausgesandt wird und die in ähnlicher Weise wie zuvor beschrieben u.a. die Empfänger der Knoten 9 und 10 erreicht und den Knoten 9 dazu veranlaßt, die übermittelte Tischplattenstellung auf dem Display 92 anzugeben. Da die Übertragungssicherheit zum Knoten 9 durch das CAN-Protokoll gewährleistet wird und da die Steuerung der Wiedergabeeinheit 92 leitunsgebunden erfolgt, kann davon ausgegangen werden, daß auch in einer gestörten Umgebung die Übertragungssicherheit gewährleistet ist.

Die Röntgenanlage kann auch mehr als zwei Komponenten enthalten, die durch drahtlos an die ihnen zugeordneten Knoten übertragene Nachrichten steuerbar sind. Zweckmäßigerweise wird man dabei die Datenübertragungsknoten von Komponenten drahtlos mit dem übrigen CAN-System kommunizieren lassen, die mobil sind und/oder einen geringen Energieverbrauch haben, so daß zum Betrieb eine Batterie ausreicht und zusätzliche Verbindungen (außer der Verbindung mit dem zugehörigen Knoten) nicht erforderlich sind. Auch für Service-Zwecke erforderliche Test- oder Diagnoseeinheiten werden zweckmäßigerweise mittels drahtloser Signalumsetzer bzw. Infrarotsender - und - Empfänger mit den übrigen Komponenten der Röntgenanlage gekoppelt.

## Patentansprüche

1. Röntgenanlage mit einer Anzahl von Komponenten, denen je ein dem CAN-Protokoll entsprechender Datenübertragungsknoten zugeordnet ist, dessen Datenein- und -Ausgang über Sender bzw. Empfänger mit anderen Datenübertragungsknoten in Wechselwirkung stehen, wobei die Datenübertragungsknoten über Leitungen mit den ihnen jeweils zugeordneten Komponenten verbunden sind,
dadurch gekennzeichnet, daß die Sender (T) und Empfänger (R) wenigstens einiger Datenübertragungsknoten (9, 10) für die drahtlose Übertragung ausgebildet sind, und daß diese Sender bzw. Empfänger so angesteuert sind, daß sie Daten zumindest an die drahtlosen Empfänger von anderen Datenübertragungsknoten senden bzw. Daten von den drahtlosen Sendern zumindest der anderen Datenübertragungsknoten empfangen können.

2. Röntgenanlage nach Anspruch 1,
dadurch gekennzeichnet, daß die Sender und Empfänger für die drahtlose Datenübertragung Lichtsender bzw. Lichtempfänger sind, vorzugsweise Infrarotsender bzw. Infrarotempfänger.

3. Röntgengerät nach einem der vorhergehenden Ansprüche,
dadurch gekennzeichnet, daß ein drahtloser Sender (8, T), der die anderen drahtlosen Empfänger erreichen kann bzw. ein drahtloser Empfänger (8, R), der Daten von den anderen drahtlosen Sendern erreichen kann, an ein leitungsgebundenes Bus-System angeschlossen ist, an das zugleich mehrere Datenübertragungsknoten (1, 2, 3) angeschlossen sind.

## Claims

1. An X-ray device comprising a number of components to each of which is assigned a data transmission node working by the CAN protocol whose data input and data output are in mutual communication with other data transmission nodes *via* transmitters and receivers, the data transmission nodes being connected to the relevant associated components through connection lines,
characterized in that the transmitter (T) and receiver (R) of at least some of the data transmission nodes (9, 10) are constructed for wireless transmission, and in that these transmitters or receivers are so controlled that they transmit data to at least the wireless receivers of other data transmission nodes and receive data from the wireless transmitters of at least the other data transmission nodes, as applicable.

2. An X-ray device as claimed in claim 1,
characterized in that the transmitters and receivers for the wireless data transmission are light transmitters and light receivers, preferably infrared transmitters and infrared receivers.

3. An X-ray device as claimed in any one of the preceding claims,
characterized in that a wireless transmitter (8, T) which can reach the other wireless receivers or a wireless receiver (8, R) which can receive data from the other wireless transmitters is connected to a line bus system to which at the same time several data transmission nodes (1, 2, 3) are connected.

## Revendications

1. Installation radiologique avec plusieurs éléments auxquels est respectivement affecté un noeud de transmission de données correspondant au protocole CAN, noeud dont l'entrée et la sortie de données sont en interaction par l'intermédiaire d'émetteurs ou récepteurs avec d'autres noeuds de transmission de données, les noeuds de transmission de données étant reliés par l'intermédiaire de lignes aux éléments qui leur sont respectivement affectés,
caractérisée en ce que les émetteurs (T) et récepteurs (R) d'au moins quelques noeuds de transmission de données (9, 10) sont conçus pour la transmission sans fil et que ces émetteurs ou récepteurs sont excités de telle sorte qu'ils transmettent des données au moins aux récepteurs sans fil d'autres noeuds de transmission de données ou peuvent recevoir les données des émetteurs sans fil du moins des autres noeuds de transmission de données.

2. Installation radiologique selon la revendication 1,
caractérisée en ce que les émetteurs et récepteurs pour la transmission de données sans fil sont des émetteurs ou récepteurs de lumière, de préférence des émetteurs ou récepteurs à infrarouges.

3. Installation radiologique selon l'une des revendications précédentes,
caractérisée en ce qu'un émetteur sans fil (8, T) qui peut atteindre les autres récepteurs sans fil ou un récepteur sans fil (8, R) qui peut recevoir les données des autres émetteurs sans fil est raccordé à un système de bus câblé auquel sont raccordés simultanément plusieurs noeuds de transmission de données (1, 2, 3).
